# EUROPÄISCHE PATENTSCHRIFT

(11) **EP 1 481 760 B1**
(45) Veröffentlichungstag und Bekanntmachung des Hinweises auf die Patenterteilung: **04.10.2006**
(21) Anmeldenummer: 04012428.1
(22) Anmeldetag: 26.05.2004
(51) Int. Cl.: B23Q 11/00, A47L 9/24, B08B 15/04, B08B 15/00

(54) **Absaugvorrichtung sowie Werkzeugtisch mit der Absaugvorrichtung**
Suction device and work table with a suction device
Dispositif d'aspiration et table de travail avec dispositif d'aspiration

(30) Priorität: 27.05.2003 DE 20308274 U; 27.05.2003 DE 20308273 U
(43) Veröffentlichungstag der Anmeldung: 01.12.2004
(73) Patentinhaber: Bergerhoff, Volker, 51674 Wiehl (DE)
(72) Erfinder: Bergerhoff, Volker, 51674 Wiehl (DE)
(74) Vertreter: Knefel, Cordula

(56) Entgegenhaltungen:
- DE-A- 19 605 891
- FR-A- 2 641 246
- SU-A- 1 618 472
- US-A- 3 417 194
- US-A- 5 274 878
- US-A- 5 746 795

## Beschreibung

Die Erfindung betrifft eine Absaugvorrichtung für handbetätigte Werkzeuge sowie einen Werkzeugtisch mit Absaugvorrichtung.

Gemäß dem Stand der Technik ist für handbetätigte Werkzeuge, beispielsweise einer Schleifmaschine, eine Absaugung vorgesehen. Hierzu ist ein Staubsauger vorhanden, mit dem das handbetätigte Werkzeug über einen Schlauch verbunden ist.

An einen Staubsauger dürfen nicht gleichzeitig mehrere handbetätigte Werkzeuge angeschlossen werden, so dass bei Verwendung unterschiedlicher Werkzeuge bei mehreren aufeinanderfolgenden Arbeitsgängen die Werkzeuge immer wieder auf dem Staubsaugerschlauch umgesteckt werden müssen.

Darüber hinaus benötigen Handwerker, insbesondere Schreiner, gemäß dem Stand der Technik eine relativ lange Rüstzeit, bis sie auf einer Baustelle tätig werden können. Die Handwerker müssen während dieser Rüstzeit die einzelnen Werkzeuge auf die Baustelle befördern, diese mit einem Absauganschluss an einen Staubsauger befestigen und mit einem Stromanschluss versehen.

Die einzelnen Werkzeuge sind in Containern verpackt und werden in diesen Containern transportiert.

Zum Stand der Technik (US-A 5,746,795) gehört eine Saugvorrichtung, an der mittels verschiedener Schlauchverbindungen mehrere Maschinen anschließbar sind. Die Schläuche der Maschinen münden in T-Stücke, derart, dass letztendlich ein Schlauch zu der Saugvorrichtung führt. Das bedeutet, dass die Schläuche von den einzelnen Maschinen zu einem einzigen zu der Saugvorrichtung führenden Schlauch zusammengeführt werden.

Diese zum Stand der Technik gehörende Vorrichtung hat den Nachteil, dass die Saugleistung sich auf mehrere Schläuche aufteilt, und dass es nicht auf einfache Art und Weise möglich ist, lediglich die eine Maschine, an der die Saugleistung gefordert wird, mit der Saugvorrichtung zu verbinden.

Das der Erfindung zugrunde liegende technische Problem besteht darin, eine Absaugvorrichtung anzugeben, bei der auf einfache Art und Weise die Schläuche von handbetätigten Werkzeugen mit einem oder mehreren Schläuchen einer oder mehrerer Absaugvorrichtungen verbunden werden können.

Weiterhin liegt der Erfindung das technische Problem zugrunde, einen Werkzeugtisch anzugeben, mit dem die Rüstzeit auf einer Baustelle in erheblichem Maße verringert werden kann. Darüber hinaus soll ein Werkzeugtisch angegeben werden, mit dem ein Platz sparendes Arbeiten möglich ist.

Dieses technische Problem wird durch eine Absaugvorrichtung mit den Merkmalen des Anspruches 1 sowie durch einen Werkzeugtisch mit den Merkmalen des Anspruches 11 gelöst.

Ausgehend von der US-A 5,746,795, die den Oberbegriff des Anspruches 1 bildet, weist die erfindungsgemäße Absaugvorrichtung die Merkmale des Anspruchs 1 auf.

Dadurch ist es möglich, die Schläuche der Werkzeuge in einfacher Art und Weise mit dem Anschluss der wenigstens einen Saugvorrichtung zu koppeln, ohne dass ein Umstecken der Schläuche bei den Werkzeugen notwendig ist.

Vorteilhaft führt von der Saugvorrichtung zu dem Anschluss an der Absaugvorrichtung ebenfalls ein Schlauch, da hierdurch die Saugvorrichtung relativ frei bewegbar gegenüber der erfindungsgemäßen Absaugvorrichtung ausgestaltet ist.

Vorteilhaft weist die erfindungsgemäße Absaugvorrichtung Schächte oder Aufnahmen, die in dem Werkzeugwagen angeordnet sind, für die mit den Werkzeugen verbundenen Schläuche und für den wenigstens einen Schlauch der wenigstens einen Saugvorrichtung auf. In diesen Schächten oder Aufnahmen sind die Schläuche vorteilhaft wenigstens annähernd vollständig anordbar, so dass bei Nichtbenutzen eines Werkzeuges der Schlauch in dem betreffenden Schacht oder der betreffenden Aufnahme angeordnet werden kann und damit nicht im Wege ist.

Vorteilhaft ist für jeden Schlauch ein Schacht oder eine Aufnahme vorgesehen, um ein Verheddern der Schläuche zu vermeiden.

Gemäß einer bevorzugten Ausführungsform ist eine entsprechende Anzahl von Schächten für die Aufnahme der Schläuche vorgesehen. In die Schächte werden die Schläuche einfach eingeschoben, und die Schläuche nutzen den vorhandenen Platz aus.

Es ist jedoch auch möglich, Aufnahmen vorzusehen, beispielsweise mit einer Aufwickelvorrichtung für die Schläuche.

Gemäß einer bevorzugten Ausführungsform der Erfindung sind sämtliche Schläuche der Werkzeuge an der Verbindungsvorrichtung angeordnet. Vorzugsweise sind Anschlussstutzen dieser Schläuche fest mit der Verbindungsvorrichtung verbunden. Der wenigstens eine von der wenigstens einen Saugvorrichtung kommende Schlauch ist gemäß der bevorzugten Ausführungsform verschiebbar in oder an der Verbindungsvorrichtung angeordnet, derart, dass eine lösbare Verbindung zwischen jeweils zwei Schläuchen herstellbar ist.

Der Saugstutzen des Schlauches, der mit der Saugvorrichtung verbunden ist, wird in der Verbindungsvorrichtung derart verschoben, dass er gegenüberliegend dem Schlauch des Werkzeuges angeordnet ist, mit dem als nächstes gearbeitet werden soll.

Um eine luftdichte Verbindung zu erzielen, ist es möglich, dass der Anschlussstutzen des Saugerschlauches in der Verbindungsvorrichtung absenkbar angeordnet ist. Zur Erhöhung der Dichtigkeit können Dichtungen vorgesehen sein.

Darüber hinaus ist es vorteilhaft, wenn der Anschlussstutzen des Saugerschlauches bei korrekter Lage, das heißt gegenüberliegend einem Anschlussstutzen eines Werkzeugschlauches, arretierbar ausgebildet ist.

Vorteilhaft ist die Verbindungsvorrichtung schwenkbar an der erfindungsgemäßen Absaugvorrichtung angeordnet, um ein Verknicken der Schläuche zu vermeiden.

Gemäß einer bevorzugten Ausführungsform besteht die Verbindungsvorrichtung aus Aluminium, Holz, Kunststoff und/oder Metall.

Die Absaugvorrichtung erlaubt im einfachsten Falle, Schläuche mehrerer handbetätigter Werkzeuge mit jeweils einem Schlauch einer Saugvorrichtung, also beispielsweise eines Staubsaugers, in einfachster Art und Weise zu verbinden.

Es ist jedoch auch möglich, beispielsweise zwei Staubsauger vorzusehen. In diesem Falle können zwei Anschlussstutzen von zwei Staubsaugern verschiebbar in der Verbindungsvorrichtung angeordnet sein. Die Verbindungsvorrichtung muss in diesem Falle für jeweils einen Anschlussstutzen eines Staubsaugers eine so genannte Parkposition aufweisen.

Die erfindungsgemäße Absaugvorrichtung kann in einem Werkzeugwagen, der mobil mit auf eine Baustelle genommen wird, angeordnet werden. Es ist auch möglich, die Absaugvorrichtung stationär in einer Werkstatt, beispielsweise unterhalb einer Werkbank anzuordnen.

Dadurch, dass der erfindungsgemäße Werkzeugtisch eine Arbeitsfläche aufweist und eine lösbar auf dem Tisch angeordnet Kreissäge, die wiederum in einem Drehtisch angeordnet ist, und dadurch dass der Tisch und die Arbeitsfläche der Kreissäge die gleiche Höhe aufweisen, kann der Werkzeugtisch einfach zu einer Baustelle transportiert werden, und es kann dort unmittelbar mit der Arbeit begonnen werden. Mit dem erfindungsgemäßen Werkzeugtisch ist auch ein Platz sparendes Arbeiten, beispielsweise in einem Kleinbus, möglich. Durch die Anordnung der Absaugvorrichtung in dem Werkzeugtisch weist dieser die oben genannten Vorteile auf.

Gemäß einer vorteilhaften Ausführungsform weist der Werkzeugtisch Rollen auf, so dass er als Werkzeugwagen ausgebildet ist. Es ist jedoch auch möglich, dass der Werkzeugtisch auf einem Gestell mit Rollen angeordnet wird.

Die folgenden Ausführungsformen beziehen sich gleichermaßen auf den Werkzeugtisch wie auch auf den Werkzeugwagen. Der Einfachheit halber werden die Ausführungen jedoch nur noch in Bezug auf den Werkzeugwagen dargestellt.

Vorteilhaft ist die Tischkreissäge lösbar auf dem Werkzeugwagen angeordnet. Dadurch ist es möglich, beispielsweise einen anderen Tisch anstelle der Kreissäge auf dem Werkzeugwagen vorzusehen. Dieser Arbeitstisch weist vorteilhaft im montierten Zustand die gleiche Höhe wie die Arbeitsfläche des Werkzeugwagens auf. Hierdurch entsteht eine große Arbeitsfläche.

Gemäß einer bevorzugten Ausführungsform ist der Tisch der Kreissäge drehbar auf dem Werkzeugwagen angeordnet. Es reicht eine Drehung von 180° aus. Es ist jedoch auch möglich, den Tisch der Kreissäge um 360° zu drehen. Vorteilhaft wird der Tisch in bevorzugten Arbeitsstellungen, beispielsweise 0° und 90° arretiert. Andere Arbeitsstellungen des Drehtisches sind jedoch auch arretierbar.

Durch die Drehbarkeit des Tisches der Kreissäge ist ein Platz sparendes Arbeiten möglich, da der Handwerker rechts oder links von dem Werkzeugwagen arbeiten kann oder auch bei Bedarf quer zu dem Werkzeugwagen.

Hierdurch ist es beispielsweise möglich, den Werkzeugwagen in einem Kleinbus anzuordnen und den Innenraum des Kleinbusses als Arbeitsraum zu verwenden.

Gemäß einer weiteren Ausführungsform weist der Werkzeugwagen wenigstens eine Aufnahme für die handbetätigten Werkzeuge auf.

Gemäß der besonders bevorzugten Ausführungsform weist der Werkzeugwagen somit die Merkmale auf, dass auf dem Werkzeugwagen eine drehbar angeordnete Kreissäge vorhanden ist, dass der Werkzeugwagen eine Arbeitsfläche aufweist, dass der Werkzeugwagen eine Absaugvorrichtung aufweist, bei der die Saugschläuche der handbetätigten Werkzeuge und der Tischkreissäge in einfacher Art und Weise mit dem Schlauch der Saugvorrichtung verbunden werden können, und dass der Werkzeugwagen wenigstens eine Aufnahme für die handbetätigten Werkzeuge aufweist.

Diese besonders bevorzugte Ausführungsform hat den Vorteil, dass durch die Kombination dieser Merkmale die Rüstzeit auf das Kürzeste minimiert wird, da der Handwerker lediglich noch den Werkzeugwagen auf die Baustelle fahren muss und dort sämtliche Werkzeuge, wie die Kreissäge und beispielsweise eine Oberfräse, eine Schleifmaschine, eine Handkreissäge, eine Handhobelmaschine und eine Stichsäge zur Verfügung stehen und sofort einsatzfähig sind.

Der Handwerker muss lediglich noch einen Stromanschluss für den Werkstattwagen herstellen, um somit den Elektroanschluss für die Steckdosen, die am Werkzeugwagen für die handbetätigten Werkzeuge vorhanden sind, sicherzustellen.

Vorteilhaft ist an dem Werkzeugwagen eine Schublade angeordnet, die wiederum gemäß einer bevorzugten Ausführungsform mit einem Vollauszug ausgestattet ist. In dieser Schublade können die Handgeräte und gegebenenfalls kleinere Zubehörteile für die einzelnen Maschinen während des Transportes deponiert werden. Es ist auch möglich, während des Arbeitens Handgeräte in dieser Schublade abzulegen. Hierdurch erhält man eine zusätzliche Ablagefläche.

Die gemäß der Erfindung vorgesehene Absaugvorrichtung mit den Schächten für die Schläuche hat den Vorteil, dass der Saugschlauch eines Werkzeuges nach dem Arbeitsvorgang in den zugehörigen Schacht geschoben werden kann und damit nicht mehr störend herumliegt. Auch während des Transportes sind die Schläuche in den Schächten angeordnet und stellen damit beim Transport kein Hindernis dar. Die Stromkabel der Handmaschinen werden vorteilhaft am Saugerschlauch der einzelnen Maschinen befestigt.

Gemäß einer weiteren vorteilhaften Ausführungsform weist der Werkzeugwagen einen Parallelanschlag auf, der an der Arbeitsfläche befestigbar ist. Es ist auch möglich, an der Arbeitsfläche einen Kappanschlag zu befestigen. Der Kappanschlag wird bei Nichtgebrauch vorteilhaft an der Seite des Werkzeugwagens angeordnet. Bei Gebrauch wird der Kappanschlag auf der Arbeitsfläche der Kreissäge befestigt und liegt auf der Arbeitsfläche des Werkzeugwagens auf. Der Kappanschlag kann ausgezogen werden, um beispielsweise lange Werkstücke zu schneiden. Diese müssen in diesem Fall nicht jeweils einzeln abgemessen werden.

Für die Anschlagschiene sind vorteilhaft an vier Seiten des Tisches der Kreissäge Befestigungsschienen vorgesehen. Je nachdem, in welcher Stellung der Tisch für die Kreissäge ausgerichtet ist, kann die Arbeitsschiene befestigt werden.

Die Tischkreissäge ist vorteilhaft lösbar an dem Werkzeugwagen angeordnet. Anstelle der Tischkreissäge kann ein weiterer Arbeitstisch angeordnet werden. Dieser Arbeitstisch kann auch auf dem zugehörigen Staubsauger montiert werden. In diesem Fall haben der Arbeitstisch des Staubsaugers und die Arbeitsfläche des Werkzeugwagens die gleiche Höhe.

Auf beiden Arbeitstischen können wiederum Klemmvorrichtungen befestigt werden, die eine feste Positionierung der Werkstücke gewährleisten, beispielsweise beim Zusammenbau von Korpusmöbeln.

Es ist auch möglich, auf dem Tisch des Staubsaugers eine Kappsäge anzuordnen. Die Kappsäge hat in diesem Fall vorteilhaft die gleiche Höhe wie die Anschlagschiene der Kreissäge, so dass die zu sägenden Werkstücke auf der Anschlagschiene und der Arbeitsfläche der Kappsäge aufgelegt werden können und horizontal ausgerichtet sind.

Für den Transport des erfindungsgemäßen Werkzeugwagens kann dieser vorteilhaft in mehrere Teile zerlegt werden.

Die Schublade kann gelöst werden. Die Kreissäge mit dem Tisch wird ebenfalls gelöst. Darüber hinaus wird der Kasten der Absaugvorrichtung abgenommen, so dass lediglich noch das Grundgestell des Werkzeugwagens übrig bleibt. Vorteilhaft ist das Grundgestell des Werkzeugwagens ebenfalls zusammenklappbar ausgebildet.

Die Platte des Tisches für die Kreissäge kann ebenfalls austauschbar ausgestaltet sein, um andere Geräte in oder an dem Tisch anzuordnen, wie beispielsweise eine Fräse.

Vorteilhaft ist in dem Werkzeugwagen oder in der Absaugvorrichtung wenigstens eine Kabeltrommel angeordnet. Die Kabeltrommel erlaubt die Herstellung eines Stromanschlusses der in dem Werkzeugwagen angeordneten Steckdosen mit einer externen Stromversorgung, wie beispielsweise einer Steckdose auf einer Baustelle.

Vorteilhaft weist der erfindungsgemäße Werkzeugwagen eine Halterung für eine Schleifmaschine auf. Die Halterung der Schleifmaschine kann derart ausgebildet sein, dass die Schleifmaschine fest, jedoch lösbar an dem Werkzeugwagen angeordnet ist. Hierdurch ist es möglich, die Schleifmaschine in dem am Werkzeugwagen befestigten Zustand zu betätigen und daran kleine Teile zu schleifen.

An dem Werkzeugwagen können auch noch weitere Halterungen für einen Akkubohrer und weitere Werkzeuge vorgesehen sein.

Durch die Drehbarkeit des Tisches der Kreissäge auf dem Werkzeugwagen ist es möglich, verschiedene Arbeitsflächen zwischen der Arbeitsplatte und dem Tisch auszubilden, um beispielsweise größere Teile mit einer Stichsäge zu bearbeiten.

Wird eine Oberfräse verwendet, ist es erforderlich, eine Schablone auf der Arbeitsfläche zu befestigen. Die Arbeitsfläche weist hierzu vorteilhaft Überstände auf, an denen die Schablone mit Schraubzwingen befestigt werden kann.

Vorteilhaft ist weiterhin ein Akkuladegerät an dem Werkzeugwagen vorgesehen, um beispielsweise einen Akkubohrer oder Akkuschrauber ständig griffbereit zu haben.

Der Werkzeugwagen ist gemäß einer weiteren vorteilhaften Ausgestaltung auf einem Treppensteiger anordbar. Der Werkzeugwagen wird zum Transport transportfähig zusammengepackt.

Der Staubsaugerschlauch wird vom Staubsauger getrennt und in einem Schacht der Schlauchgarage verstaut. Die handbetätigten Werkzeuge können in der Schublade verstaut werden und die Schläuche, sofern sie nicht schon in den Schächten angeordnet sind, in die Schächte geschoben werden. Das Kabel zur externen Stromversorgung wird aufgewickelt. In dieser Form kann der Werkzeugwagen in kompakter Form auf dem Treppensteiger angeordnet werden oder in einem Auto zum weiteren Transport deponiert werden.

Auf der Zeichnung ist ein Ausführungsbeispiel der Erfindung dargestellt, und zwar zeigen:
- Fig. 1: einen erfindungsgemäßen Werkzeugwagen in Seitenansicht;
- Fig. 2: einen Werkzeugwagen mit Parallelanschlag in Draufsicht;
- Fig. 3: einen Werkzeugwagen mit Kappanschlag in Draufsicht;
- Fig. 4: einen Werkzeugwagen mit Arbeitstisch in Draufsicht;
- Fig. 5: einen Längsschnitt durch eine Verbindungsvorrichtung;
- Fig. 6: einen Schnitt nach der Linie VI-VI der Fig. 5;
- Fig. 7: einen Werkzeugschlauch in Ansicht, der in einem Schacht angeordnet ist;
- Fig. 8: einen Staubsaugerschlauch in Ansicht, der in einem Schacht angeordnet ist;
- Fig. 9: einen Querschnitt durch das Schachtsystem der erfindungsgemäßen Absaugvorrichtung.

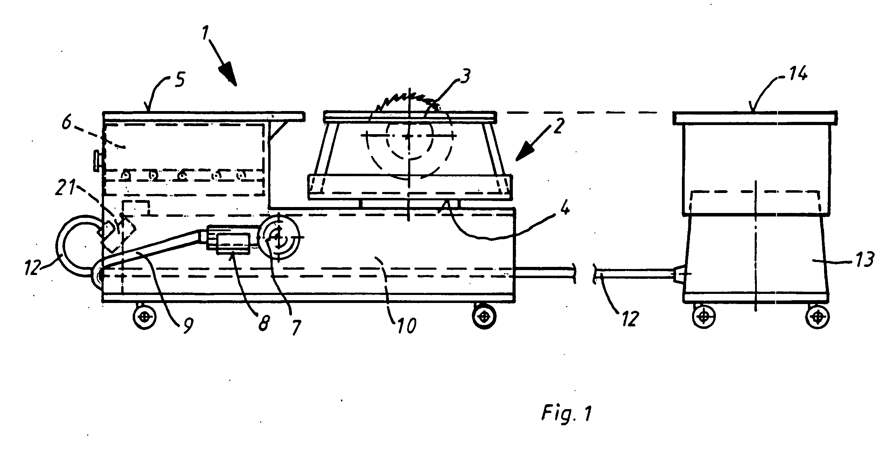

Fig. 1 zeigt einen Werkzeugwagen (1) mit einem Tisch (2) einer Kreissäge (3). Der Tisch (2) der Kreissäge (3) ist drehbar über einen Drehtisch (4) auf dem Werkzeugwagen (1) gelagert. Der Werkzeugwagen (1) weist zusätzlich eine Arbeitsfläche (5) auf. Die Arbeitsfläche (5) und der Maschinentisch (2) der Kreissäge (3) weisen die gleiche Arbeitshöhe auf.

In dem Werkzeugwagen (1) ist eine Schublade (6) mit Vollauszug angeordnet.

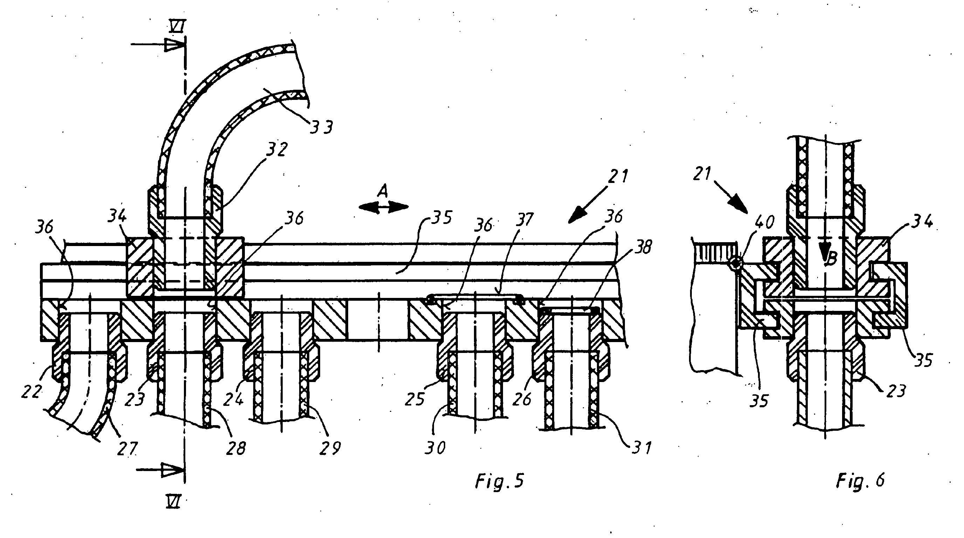

Eine Schleifmaschine (7) ist in einer Halterung (8) gelagert. Ein Schlauch (9) zur Staubabsaugung während des Arbeitens mit der Schleifmaschine (7) ist in einem Raum (10) des Werkzeugwagens (1) gelagert. Der Raum (10) ist in mehrere Schächte unterteilt, wie in den Fig. 5 bis 9 noch erläutert wird. Anstelle der Schleifmaschine können auch andere Handmaschinen vorgesehen sein.

Für die Staubabsaugung ist darüber hinaus eine Verbindungsvorrichtung (21) gezeigt. Ein weiterer Schlauch (12) führt zu einem Staubsauger (13). Auf dem Staubsauger (13) ist eine weitere Arbeitsplatte (14) oder ein Arbeitstisch angeordnet, die die gleiche Höhe wie die Arbeitsfläche (5) und der Tisch der Kreissäge (2) aufweist.

Eine Staubabsaugung für die Kreissäge (3) ist nicht dargestellt, jedoch vorgesehen.

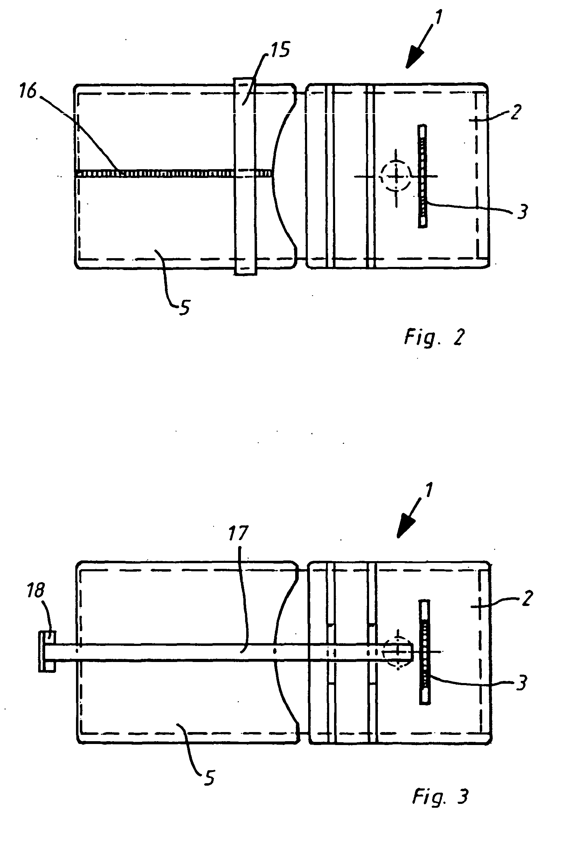

Fig. 2 zeigt den Werkzeugwagen (1) mit der Arbeitsfläche (5) und dem Tisch (2) der Kreissäge (3). Auf der Arbeitsfläche (5) ist ein Parallelanschlag (15) angeordnet für die Führung von Werkstücken, die mit der Kreissäge (3) zugeschnitten werden sollen.

Auf der Arbeitsfläche (5) sind darüber hinaus eine oder mehrere Maßskalen (16) vorgesehen.

Gemäß Fig. 3 ist der Werkzeugwagen umgestaltet worden, dahingehend, dass auf dem Tisch (2) der Kreissäge (3) eine Anschlagschiene (17) angeordnet ist, die auf der Arbeitsfläche (5) aufliegt. An dieser Anschlagschiene (17), rechtwinklig zum Sägeblatt, können die Werkstücke gekürzt werden. An der Anschlagschiene (17) ist eine Auflage (18) mit Längenanschlag befestigt. Der Anschlag ist jedoch auch in anderen Winkeln als 90° arretierbar.

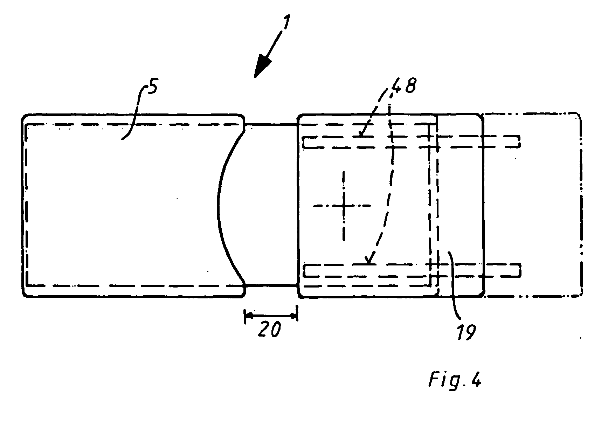

Fig. 4 zeigt den Werkzeugwagen (1) mit der Arbeitsfläche (5). Anstelle der Tischkreissäge (3) ist ein Arbeitstisch (19) auf dem Drehtisch des Werkzeugwagens (1) angeordnet. Dieser Arbeitstisch (19) ist variabel verschiebbar und justierbar bis in die gestrichelt dargestellte Position mittels Führungsschiene (48). Durch ein Vergrößern des Abstandes (20) ist es möglich, auch lange Werkstücke zu bearbeiten.

Fig. 5 zeigt eine Verbindungsvorrichtung (21), an der Anschlussstutzen (22 bis 26) von Schläuchen (27 bis 31), die mit handbetätigten Werkzeugen (nicht dargestellt) verbunden sind, angeordnet sind.

In der Verbindungsvorrichtung (21) ist ein Anschlussstutzen (32) eines Schlauches (33), der mit einem Staubsauger (nicht dargestellt) verbunden ist, in Richtung des Doppelpfeiles (A) verschiebbar gelagert.

Der Anschlussstutzen (32) ist mittels einer Platte (34), die in Führungen (35) der Verbindungsvorrichtung (21) gelagert ist, verschiebbar.

Der Anschlussstutzen (32) des Schlauches (33) des Staubsaugers wird dem Anschlussstutzen des Werkzeuges gegenüberliegend angeordnet, mit dem als nächstes gearbeitet werden soll.

Um eine wenigstens annähernd luftdichte Verbindung zwischen dem Anschlussstutzen (32) und den Anschlussstutzen (22 bis 26) zu erreichen, kann der Anschlussstutzen (32) zum einen in der Platte (34) und in die die Anschlussstutzen (22 bis 26) aufnehmenden Bohrungen (36) abgesenkt werden.

Zum anderen ist es auch möglich, in der Verbindungsvorrichtung eine ringförmige Dichtung (37) vorzusehen. Diese Dichtung (37) weist gleichzeitig eine Arretierwirkung für die Platte (34) auf.

Gemäß einer weiteren Ausführungsform kann, wie bei dem Anschlussstutzen (26) dargestellt, der Anschlussstutzen (26) eine Dichtung (38) tragen.

Es ist auch eine Kombination der drei genannten Möglichkeiten denkbar.

Fig. 6 zeigt die Verbindungsvorrichtung (21) mit den Führungen (35), in denen die Platte (34) verschiebbar gelagert ist. Der Anschlussstutzen (32) ist in der Platte (34) angeordnet und kann in Richtung des Pfeiles (B) zur Herstellung der Verbindung mit dem Anschlussstutzen (23) bewegt werden.

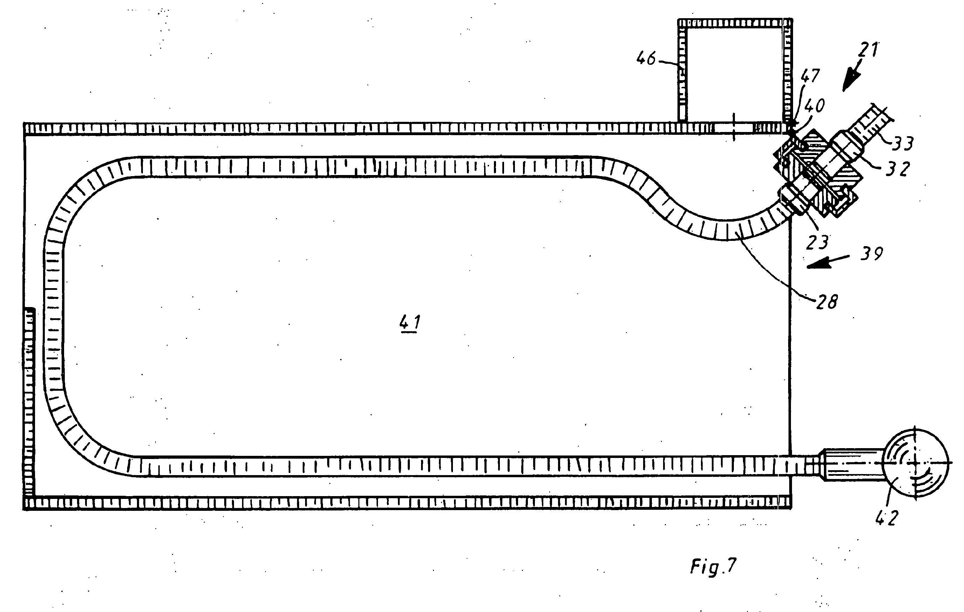

Fig. 7 zeigt eine Absaugvorrichtung (39) mit der Verbindungsvorrichtung (21). Die Verbindungsvorrichtung (21) ist über ein Scharnier (40) schwenkbar an der Absaugvorrichtung (39) angeordnet. Wegen der besseren Übersicht ist lediglich ein Schlauch dargestellt, der in einem Schacht (41) angeordnet ist. Der Schlauch (28) führt zu einem Handschleifer (42). Der Schlauch (28) nutzt den Raum des Schachtes (41) derart aus, dass der Schlauch (28) fast vollständig in dem Schacht (41) angeordnet ist.

Die Absaugvorrichtung (39) trägt ein Gehäuse (46), welches über ein Scharnier (47) kippbar an der Absaugvorrichtung (39) befestigt ist. In dem Gehäuse (46) können Steckverbindungen oder Stromversorgungsanschlüsse und eine Kabeltrommel sauber und weitgehend verschmutzungsfrei angeordnet werden.

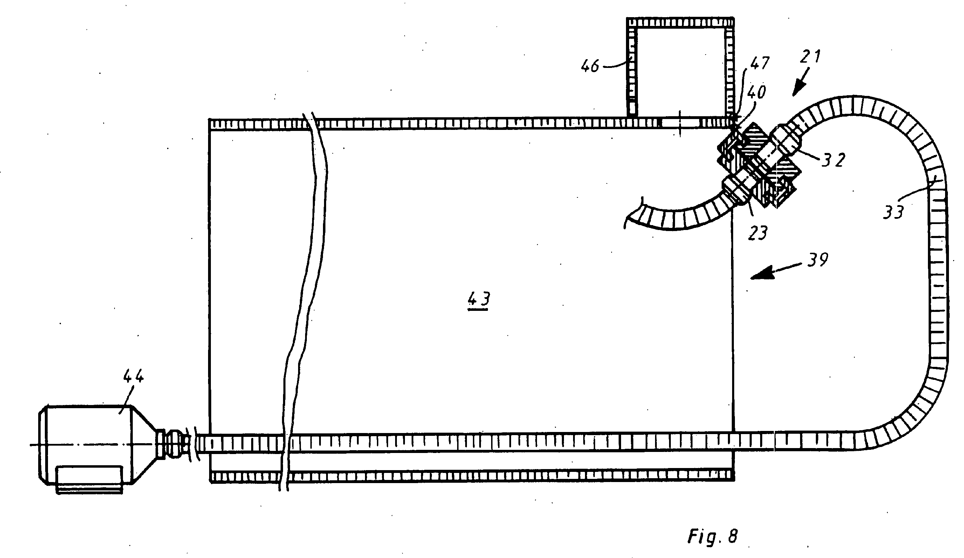

Gemäß Fig. 8 ist die Anordnung des Schlauches (33) in dem für den Schlauch (33) vorgesehenen Schacht (43) dargestellt. Der Schlauch (33) wird durch die Absaugvorrichtung (39) hindurchgeführt zu einem Staubsauger (44). Der Staubsauger kann jedoch auch direkt, das heißt ohne Durchführung durch den Schacht, angeschlossen werden.

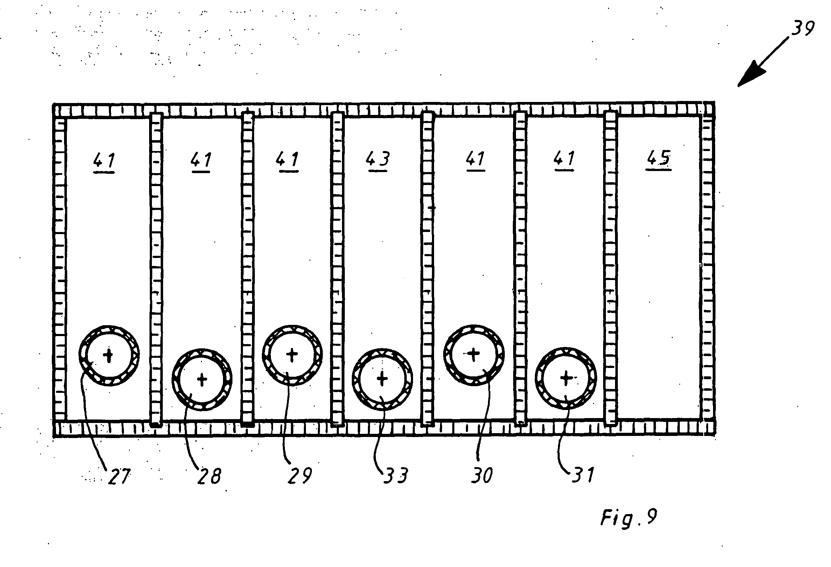

Fig. 9 zeigt die Absaugvorrichtung (39) mit den Schächten (41, 43). In dem Schacht (43) ist der Staubsaugerschlauch (33) angeordnet. In den Schächten (41) sind die Werkzeugschläuche (27 bis 31) angeordnet. Der Schacht (45) ist noch frei und kann für einen Schlauch eines weiteren Werkzeuges verwendet werden.

### Bezugszahlen

- 1: Werkzeugwagen
- 2: Tisch für Kreissäge
- 3: Kreissäge
- 4: Drehtisch
- 5: Arbeitsfläche
- 6: Schublade
- 7: Handschleifer
- 8: Halterung
- 9: Schlauch
- 10: Raum
- 12: Schlauch
- 13: Staubsauger
- 14: Arbeitsplatte
- 15: Parallelanschlag
- 16: Skala
- 17: Kappanschlag
- 18: Auflage
- 19: Arbeitstisch
- 20: Abstand
- 21: Verbindungsvorrichtung
- 22 bis 26: Anschlussstutzen
- 27 bis 31: Schläuche
- 32: Stutzen
- 33: Schlauch
- 34: Platte
- 35: Führungen
- 36: Bohrungen
- 37: Dichtung
- 38: Dichtung
- 39: Absaugvorrichtung
- 40: Scharnier
- 41: Schacht
- 42: Handschleifer
- 43: Schacht
- 44: Staubsauger
- 45: Schacht
- 46: Gehäuse
- 47: Scharnier
- 48: Führungsschienen
- A, B: Pfeile

## Patentansprüche

1. Absaugvorrichtung für handbetätigte Werkzeuge,
- mit wenigstens einem Anschluss (32, 34) für eine oder mehrere Saugvorrichtungen (44),
- mit wenigstens zwei mit jeweils einem der Werkzeuge verbundenen Schläuchen (27 bis 31) und
- mit wenigstens einer Verbindungsvorrichtung (21) zum lösbaren Verbinden jeweils eines Schlauches (27 bis 31) der wenigstens zwei Werkzeuge (42) mit jeweils einem Anschluss der einen oder mehreren Saugvorrichtungen (44),
**dadurch gekennzeichnet, dass** die Schläuche (27 bis 31) der Werkzeuge (3, 7, 42) an der Verbindungsvorrichtung (21) angeordnet sind, und dass der wenigstens eine Schlauch (33) der wenigstens einen Saugvorrichtung (44) verschiebbar in oder an der Verbindungsvorrichtung (21) angeordnet ist, derart, dass eine lösbare Verbindung zwischen dem wenigstens einen Schlauch (33) der wenigstens einen Saugvorrichtung (44) und jeweils nur einem der Schläuche (27 bis 31) der Werkzeuge (3, 7, 42) herstellbar ist.

2. Absaugvorrichtung nach Anspruch 1, **dadurch gekennzeichnet, dass** zwischen dem Anschluss (32, 34) und der wenigstens einen Saugvorrichtung (44) ein Schlauch (33) vorgesehen ist.

3. Absaugvorrichtung nach Anspruch 1 oder 2, **dadurch gekennzeichnet, dass** Schächte (41, 43, 45) oder Aufnahmen für die mit den Werkzeugen (42) verbundenen Schläuche (27 bis 31) und/oder für den wenigstens einen Schlauch (33) der wenigstens einen Saugvorrichtung (44) vorgesehen sind.

4. Absaugvorrichtung nach Anspruch 3, **dadurch gekennzeichnet, dass** für jeden Schlauch (27 bis 31, 33) ein Schacht (41, 43, 45) vorgesehen ist.

5. Absaugvorrichtung nach Anspruch 3, **dadurch gekennzeichnet, dass** die Schläuche (27 bis 31, 33) in den Aufnahmen oder Schächten (41, 43, 45) wenigstens annähernd vollständig anordbar sind.

6. Absaugvorrichtung nach Anspruch 1, **dadurch gekennzeichnet, dass** Anschlussstutzen (22 bis 26; 32) der Schläuche (27 bis 31; 33) mittels der Verbindungsvorrichtung (21) sich gegenüberliegend und wenigstens annähernd luftdicht zueinander anordbar sind.

7. Absaugvorrichtung nach Anspruch 5, **dadurch gekennzeichnet, dass** der Anschlussstutzen (32) des Saugerschlauches verschiebbar in der Verbindungsvorrichtung (21) angeordnet ist.

8. Absaugvorrichtung nach Anspruch 1, **dadurch gekennzeichnet, dass** zwischen dem Anschlussstutzen (32) des Saugerschlauches (12, 33) und dem Anschlussstutzen (25, 26) des Schlauches (30, 31) des Werkzeuges (42) wenigstens eine Dichtung (37, 38) vorgesehen ist.

9. Absaugvorrichtung nach Anspruch 1, **dadurch gekennzeichnet, dass** der Anschlussstutzen (32) des Saugerschlauches (33) und/oder die Anschlussstutzen (22 bis 26) der Schläuche (27 bis 31) des Werkzeuges (42) absenkbar in der Verbindungsvorrichtung (21) angeordnet sind.

10. Absaugvorrichtung nach Anspruch 1, **dadurch gekennzeichnet, dass** die Verbindungsvorrichtung (21) schwenkbar an der Absaugvorrichtung (39) oder an einem Werkzeugtisch (1) angeordnet ist.

11. Werkzeugtisch mit einer Absaugvorrichtung nach Anspruch 1, **dadurch gekennzeichnet, dass** der Werkzeugtisch (1) eine Arbeitsfläche (5) und eine auf dem Werkzeugtisch (1) angeordnete Kreissäge (3) aufweist, wobei die Kreissäge (3) in einem Tisch (2) angeordnet ist, und dass der Tisch (2) und die Arbeitsfläche (5) die gleiche Höhe aufweisen.

12. Werkzeugtisch nach Anspruch 11, **dadurch gekennzeichnet, dass** der Werkzeugtisch (1) Rollen aufweist.

13. Werkzeugtisch nach Anspruch 11, **dadurch gekennzeichnet, dass** der Tisch (2) der Kreissäge (3) lösbar auf einem Drehtisch (4) angeordnet ist.

14. Werkzeugtisch nach Anspruch 11, **dadurch gekennzeichnet, dass** der Tisch (2) der Kreissäge (3) drehbar auf dem Drehtisch (1) angeordnet ist.

15. Werkzeugtisch nach Anspruch 11, **dadurch gekennzeichnet, dass** der Drehtisch (4) in vorbestimmten Drehstellungen arretierbar auf dem Werkzeugtisch (1) angeordnet ist.

16. Werkzeugtisch nach Anspruch 11, **dadurch gekennzeichnet, dass** der Werkzeugtisch (1) wenigstens eine Aufnahme (8) und/oder wenigstens einen Stromanschluss für die handbetätigten Werkzeuge (7) aufweist.

17. Werkzeugtisch nach Anspruch 11, **dadurch gekennzeichnet, dass** anstelle des Tisches (2) der Kreissäge (3) ein Arbeitstisch (14) auf dem Werkzeugtisch (1) anordbar ist, wobei der Arbeitstisch (14) und die Arbeitsfläche (5) die gleiche Höhe aufweisen.

18. Werkzeugtisch nach einem der vorhergehenden Ansprüche, **dadurch gekennzeichnet, dass** der Arbeitstisch (14) auf einer Schiene (48) über eine Tischfläche des Drehtisches (4) verschiebbar angeordnet ist.

19. Werkzeugtisch nach Anspruch 11, **dadurch gekennzeichnet, dass** der Arbeitstisch (14) auf einem Staubsauger (13) anordbar ist, und dass der auf dem Staubsauger (13) angeordnete Tisch (14) und die Arbeitsfläche (5) des Werkzeugtisches (1) die gleiche Höhe aufweisen.

20. Werkzeugtisch nach Anspruch 11, **dadurch gekennzeichnet, dass** der Werkzeugtisch (1) wenigstens eine Schublade (6) zur Aufnahme eines oder mehrerer handbetätigter Werkzeuge (7) und/oder wenigstens eine Halterung (8) für eine Handmaschine (7, 42) aufweist.

21. Werkzeugtisch nach Anspruch 11, **dadurch gekennzeichnet, dass** an der Arbeitsfläche (3) des Werkzeugtisches (1) ein Kappanschlag (17) und/oder auf dem Tisch (5) des Werkzeugtisches (1) ein Parallelanschlag (15) befestigbar ist.

22. Werkzeugtisch nach Anspruch 21, **dadurch gekennzeichnet, dass** an dem Tisch (2) der Kreissäge (3) wenigstens eine Befestigungsschiene für die Anschlagschiene (17) vorgesehen ist.

23. Werkzeugtisch nach Anspruch 11, **dadurch gekennzeichnet, dass** der Werkzeugtisch (1) in mehrere Bestandteile zerlegbar ausgebildet ist.

24. Werkzeugtisch nach Anspruch 24, **dadurch gekennzeichnet, dass** der Werkzeugtisch (1) ein Grundgestell aufweist, auf oder an dem die Absaugvorrichtung (39), die Schublade (6) und der Tisch (2) der Kreissäge (3) anordbar ist.

25. Werkzeugtisch nach Anspruch 24, **dadurch gekennzeichnet, dass** das Grundgestell des Werkzeugtisches (1) zusammenklappbar ausgebildet ist.

26. Werkzeugtisch nach Anspruch 11, **dadurch gekennzeichnet, dass** in oder an dem Werkzeugtisch (1) wenigstens eine Kabeltrommel und/oder ein Akkuladegerät angeordnet ist.

27. Werkzeugtisch nach Anspruch 11, **dadurch gekennzeichnet, dass** die Arbeitsfläche (5) Überstände aufweist.

28. Werkzeugtisch nach Anspruch 11, **dadurch gekennzeichnet, dass** der Werkzeugtisch (1) auf einem Treppensteiger anordbar ist.

## Claims

1. A suction device for hand tools,
- having a least one coupling (32, 34) for one or more vacuum devices (44),
- having at least two hoses (27 to 31) which are connected in each case to one of the tools, and
- having at least one connection device (21) for detachably connecting in each case one hose (27 to 31) of the at least two tools (42) to a respective coupling of the one or more vacuum devices (44),
**characterised in that** the hoses (27 to 31) of the tools (3, 7, 42) are arranged on the connection device (21), and **in that** the at least one hose (33) of the at least one vacuum device (44) is arranged displaceably in or on the connection device (21) such that a detachable connection may be made between the at least one hose (33) of the at least one vacuum device (44) and in each case only one of the hoses (27 to 31) of the tools (3, 7, 42).

2. A suction device according to Claim 1, **characterised in that** a hose (33) is provided between the coupling (32, 34) and the at least one vacuum device (44).

3. A suction device according to Claim 1 or 2, **characterised in that** shafts (41, 43, 45) or receivers for the hoses (27 to 31) connected to the tools (42) and/or for the at least one hose (33) of the at least one vacuum device (44) are provided.

4. A suction device according to Claim 3, **characterised in that** a shaft (41, 43, 45) is provided for each hose (27 to 31, 33).

5. A suction device according to Claim 3, **characterised in that** the hoses (27 to 31, 33) may be arranged at least approximately completely in the receivers or shafts (41, 43, 45).

6. A suction device according to Claim 1, **characterised in that** coupling connectors (22 to 26; 32) of the hoses (27 to 31; 33) may be arranged opposite one another by means of the connection device (21) and at least approximately air-tight in relation to one another.

7. A suction device according to Claim 5, **characterised in that** the coupling connector (32) of the vacuum dust collector is arranged to be displaceable in the connection device (21).

8. A suction device according to Claim 1, **characterised in that** at least one seal (37, 38) is provided between the coupling connector (32) of the vacuum suction hose (12, 33) and the coupling connector (25, 26) of the hose (30, 31) of the tool (42).

9. A suction device according to Claim 1, **characterised in that** the coupling connector (32) of the vacuum suction hose (33) and/or the coupling connectors (22 to 26) of the hoses (27 to 31) of the tool (42) are arranged such that they are capable of withdrawing down into the connection device (21).

10. A suction device according to Claim 1, **characterised in that** the connection device (21) is arranged pivotally on the suction device (39) or on a tool table (1).

11. A tool table having a suction device according to Claim 1, **characterised in that** the tool table (1) has a work surface (5) and a circular saw (3) arranged on the tool table (1), the circular saw (3) being arranged in a table (2), and **in that** the table (2) and the work surface (5) are at the same height.

12. A tool table according to Claim 11, **characterised in that** the tool table (1) has rollers.

13. A tool table according to Claim 11, **characterised in that** the table (2) for the circular saw (3) is arranged detachably on a turntable (4).

14. A tool table according to Claim 11, **characterised in that** the table (2) for the circular saw (3) is arranged to be rotatable on the turntable (1).

15. A tool table according to Claim 11, **characterised in that** the turntable (4) is arranged to be locked in predetermined rotary positions on the tool table (1).

16. A tool table according to Claim 11, **characterised in that** the tool table (1) has at least one receiver (8) and/or at least one power connection for the hand tools (7).

17. A tool table according to Claim 11, **characterised in that** instead of the table (2) for the circular saw (3), a worktable (14) may be arranged on the tool table (1), the worktable (14) and the work surface (5) being at the same height.

18. A tool table according to one of the preceding claims, **characterised in that** the worktable (14) is arranged to be displaceable on a rail (48) by way of a table surface of the turntable (4).

19. A tool table according to Claim 11, **characterised in that** the worktable (14) may be arranged on a vacuum dust collector (13), and **in that** the table (14) arranged on the vacuum dust collector (13) and the work surface (5) of the tool carriage (1) are at the same height.

20. A tool table according to Claim 11, **characterised in that** the tool table (1) has at least one drawer (6) for receiving one or more hand tools (7) and/or at least one mounting (8) for a power hand tool (7, 42).

21. A tool table according to Claim 11, **characterised in that** a cross-wise stop (17) may be secured to the work surface (3) of the tool table (1) and/or a parallel stop (15) may be secured to the table (5) of the tool table (1).

22. A tool table according to Claim 21, **characterised in that** at least one securing rail is provided for the stop rail (17) on the table (2) for the circular saw (3).

23. A tool table according to Claim 11, **characterised in that** the tool table (1) is constructed such that it may be dismantled into a plurality of component parts.

24. A tool table according to Claim 23, **characterised in that** the tool table (1) has a basic frame on or at which the suction device (39), the drawer (6) and the table (2) for the circular saw (3) may be arranged.

25. A tool table according to Claim 24, **characterised in that** the basic frame of the tool table (1) is constructed such that it can be folded up.

26. A tool table according to Claim 11, **characterised in that** at least one cable drum and/or battery charging device is arranged in or on the tool table (1).

27. A tool table according to Claim 11, **characterised in that** the work surface (5) has projecting parts.

28. A tool table according to Claim 11, **characterised in that** the tool table (1) may be arranged on a trolley.

## Revendications

1. Dispositif d'aspiration pour outils à actionnement manuel,
- avec au moins un raccord (32, 34) pour un ou plusieurs dispositifs d'aspiration (44),
- avec au moins deux flexibles (27 à 31) reliés chacun à un des outils et
- avec au moins un dispositif de liaison (21) pour relier de manière amovible chaque flexible (27 à 31) des au moins deux outils (42) à un raccord respectif du ou des dispositifs d'aspiration (44),
**caractérisé en ce que** les flexibles (27 à 31) des outils (3, 7, 42) sont disposés sur le dispositif de liaison (21) et **en ce que** l'au moins un flexible (33) de l'au moins un dispositif d'aspiration (44) est disposé de manière mobile dans ou sur le dispositif de liaison (21) de manière à pouvoir établir une liaison amovible entre l'au moins un flexible (33) de l'au moins un dispositif d'aspiration (44) et respectivement un des flexibles (27 à 31) des outils (3, 7, 42).

2. Dispositif d'aspiration selon la revendication 1, **caractérisé en ce qu'**un flexible (33) est prévu entre le raccord (32, 34) et l'au moins un dispositif d'aspiration (44).

3. Dispositif d'aspiration selon la revendication 1 ou 2, **caractérisé en ce que** des cavités (41, 43, 45) ou des logements sont prévus pour les flexibles (27 à 31) reliés aux outils (42) et/ou pour l'au moins un flexible (33) de l'au moins un dispositif d'aspiration (44).

4. Dispositif d'aspiration selon la revendication 3, **caractérisé en ce qu'**une cavité (41, 43, 45) est prévue pour chaque flexible (27 à 31, 33).

5. Dispositif d'aspiration selon la revendication 3, **caractérisé en ce que** les flexibles (27 à 31, 33) peuvent être disposés presque complètement dans les logements ou les cavités (41, 43, 45).

6. Dispositif d'aspiration selon la revendication 1, **caractérisé en ce que** des tubulures de raccordement (22 à 26 ; 32) des flexibles (27 à 31 ; 33) peuvent être disposées les unes en face des autres et de manière au moins presque hermétique les unes par rapport aux autres au moyen du dispositif de liaison (21).

7. Dispositif d'aspiration selon la revendication 5, **caractérisé en ce que** la tubulure de raccordement (32) du flexible d'aspirateur est disposée de manière mobile dans le dispositif de liaison (21).

8. Dispositif d'aspiration selon la revendication 1, **caractérisé en ce qu'**au moins un joint (37, 38) est prévu entre la tubulure de raccordement (32) du flexible d'aspirateur (12, 33) et la tubulure de raccordement (25, 26) du flexible (30, 31) de l'outil (42).

9. Dispositif d'aspiration selon la revendication 1, **caractérisé en ce que** la tubulure de raccordement (32) du flexible d'aspirateur (33) et/ou les tubulures de raccordement (22 à 26) des flexibles (27 à 31) de l'outil (42) sont disposées dans le dispositif de liaison (21) de manière à pouvoir être escamotées.

10. Dispositif d'aspiration selon la revendication 1, **caractérisé en ce que** le dispositif de liaison (21) est disposé sur le dispositif d'aspiration (39) ou sur un plateau porte-outil (1) de manière à pouvoir pivoter.

11. Plateau porte-outil avec un dispositif d'aspiration selon la revendication 1, **caractérisé en ce que** le plateau porte-outil (1) comporte un plan de travail (5) et une scie circulaire (3) disposée sur le plateau porte-outil (1), la scie circulaire (3) étant disposée dans une table (2), et **en ce que** la table (2) et le plan de travail (5) sont à même hauteur.

12. Plateau porte-outil selon la revendication 11, **caractérisé en ce que** le plateau porte-outil (1) comporte des roulettes.

13. Plateau porte-outil selon la revendication 11, **caractérisée en ce que** la table (2) de la scie circulaire (3) est disposée de manière amovible sur une table rotative (4).

14. Plateau porte-outil selon la revendication 11, **caractérisée en ce que** la table (2) de la scie circulaire (3) est disposée sur la table rotative (4) de manière à pouvoir tourner.

15. Plateau porte-outil selon la revendication 11, **caractérisé en ce que** la table rotative (4) est disposée sur le plateau porte-outil (1) de manière à pouvoir être bloquée dans des positions angulaires préalablement déterminées.

16. Plateau porte-outil selon la revendication 11, **caractérisé en ce que** le plateau porte-outil (1) comporte au moins un logement (8) et/ou au moins une prise de courant pour les outils à actionnement manuel (7).

17. Plateau porte-outil selon la revendication 11, **caractérisé en ce qu'**une table de travail (14) peut être disposée sur le plateau porte-outil (1) à la place de la table (2) de la scie circulaire (3), la table de travail (14) et le plan de travail (5) étant à même hauteur.

18. Plateau porte-outil selon une des revendications précédentes, **caractérisé en ce que** la table de travail (14) est disposée sur un rail (48) de manière à pouvoir être déplacée au-dessus d'une surface de table de la table rotative (4).

19. Plateau porte-outil selon la revendication 11, **caractérisée en ce que** la table de travail (14) peut être disposée sur un aspirateur (13) et **en ce que** la table (14) disposée sur l'aspirateur (13) et le plan de travail (5) du plateau porte-outil (1) sont à même hauteur.

20. Plateau porte-outil selon la revendication 11, **caractérisé en ce que** le plateau porte-outil (1) comporte au moins un tiroir (6) pour loger un ou plusieurs outils à actionnement manuel (7) et/ou comporte au moins un support (8) pour une machine manuelle (7, 42).

21. Plateau porte-outil selon la revendication 11, **caractérisé en ce qu'**un guide-butée (17) peut être fixé sur le plan de travail (3) du plateau porte-outil (1) et/ou **en ce qu'**une butée parallèle (15) peut être fixée sur la table (5) du plateau porte-outil (1).

22. Plateau porte-outil selon la revendication 21, **caractérisé en ce qu'**au moins un rail de fixation pour le rail de butée (17) est prévu sur la table (2) de la scie circulaire (3).

23. Plateau porte-outil selon la revendication 11, **caractérisé en ce que** le plateau porte-outil (1) est réalisé de manière à pouvoir être démonté en plusieurs composants.

24. Plateau porte-outil selon la revendication 23, **caractérisé en ce que** le plateau porte-outil (1) comporte un bâti de base sur lequel le dispositif d'aspiration (39), le tiroir (6) et la table (2) de la scie circulaire (3) peuvent être disposés.

25. Plateau porte-outil selon la revendication 24, **caractérisé en ce que** le bâti de base du plateau porte-outil (1) est réalisé de manière à pouvoir être plié.

26. Plateau porte-outil selon la revendication 11, **caractérisé en ce qu'**au moins une bobine de câble et/ou un appareil pour charger des accumulateurs sont disposés dans ou sur le plateau porte-outil (1).

27. Plateau porte-outil selon la revendication 11, **caractérisé en ce que** le plan de travail (5) comporte des saillies.

28. Plateau porte-outil selon la revendication 11, **caractérisé en ce que** le plateau porte-outil (1) peut être disposé sur un dispositif de montée d'escaliers.
